Europäisches Patentamt

European Patent Office

Office européen des brevets

(11) Publication number: **0 299 771**
A2

# EUROPEAN PATENT APPLICATION

(21) Application number: **88306463.6**

(22) Date of filing: **14.07.88**

(51) Int. Cl.⁴: **H 01 L 41/04**
H 01 L 41/08

(30) Priority: **15.07.87 JP 176893/87**

(43) Date of publication of application:
**18.01.89 Bulletin 89/03**

(84) Designated Contracting States: **CH DE GB LI**

(71) Applicant: **SEIKO INSTRUMENTS INC.**
**31-1, Kameido 6-chome Koto-ku**
**Tokyo 136 (JP)**

(72) Inventor: **Yamasaki, Masahara c/o Seiko Instruments Inc.**
**31-1 Kameido 6-chome**
**Koto-ku Tokyo (JP)**

(74) Representative: **Caro, William Egerton et al**
**J. MILLER & CO. Lincoln House 296-302 High Holborn**
**London WC1V 7JH (GB)**

(54) Wave motor driving circuit.

(57) A wave motor driving circuit for driving moveable body of a wave motor (4) frictionally by vibrations generated by applying a driving signal to an electromechanical transducer fixed to an elastic body, comprises a driving waveform circuit (2) for forming a driving signal to drive the wave motor and a position sensor (5) for detecting rotational position of the moveable body. A position detector circuit (6) outputs positional information from the position sensor (5) in accordance with a request signal (16). A detection control circuit (7) generates the request signal (16) and alters an interval of generation of request signals in response to positional information from the position detector means.

*F I G. 1*

## Description

## WAVE MOTOR DRIVING CIRCUIT

This invention relates to wave motor driving circuits.

Two types of ultrasonic motor are known. One type is a standing-wave motor which employs a Langevin oscillator as a driving source. A motor of this type is disclosed in US-A-4019073. The other type is a travelling-wave motor employing a travelling wave generated on a stator for driving a rotor provided on the stator. The travelling-wave motor generates smaller wear of a fiction transmission surface between the stator and the rotor. Moreover, the travelling wave motor can more easily be driven in the reverse direction that the standing-wave motor. Travelling-wave motors are disclosed in US-A-4513219, US-A-4562374 and EP-A-0169297. The travelling-wave motors of US-A-4513219 and US-A-4562374 essentially consists of an annular vibrating body and a moveable body provided thereon. The vibrating body has an annular piezoelectric vibrator thereon.

The travelling-wave motor disclosed in EP-A-0169297 comprises a stator which is a disc-shaped elastic vibrating body having a tooth-like circular protrusion. The vibrating body has a disc-shaped piezoelectric vibrator thereon. A moveable body is provided on the protrusion of the vibrating body and has a central shaft for a rotational guide. A pressure regulating mechanism is provided on the central shaft for providing a suitable contact pressure between the vibrating body and the moveable body to conduct efficiently the travelling wave component to the moveable body.

Since travelling-wave motors employ friction between a vibrating body and a moveable body to drive the latter, the rotational velocity depends on the condition of the surfaces in frictional contact. Moreover, the rotational velocity also depends on the voltage applied to the piezoelectric vibrator. Travelling-wave motors employing mechanisms for controlling rotational velocity and rotational position of a moveable body are disclosed in JP-A-8551478 and JP-A-85113675. The travelling-wave motor disclosed in JP-A-8551478 employs a divided metal pattern formed on an upper surface of a moveable body and a rotation detecting leaf spring contacting the upper surface of the movable body in order to derive rotational position information as electrical signals. The travelling-wave motor disclosed in JP-A-85113675 employs a photo-diode, an aperture in a disc-shaped moveable body and a photo-transistor in order to derive rotational position information as electrical signals. Both travelling-wave motors described above conduct detection of position every time the motor is driven. Therefore, these travelling-wave motors have the disadvantage that a relatively large amount of energy is consumed by the derivation of rotational position information.

The present invention seeks to provide a wave motor driving circuit which is energy saving, has relatively little position slippage, and in which operation of a position detection circuit is controlled in accordance with the state of operation of the wave motor.

According to the present invention there is provided a wave motor driving circuit for driving moveable body of a wave motor frictionally by vibrations generated by applying a driving signal to an electromechanical transducer fixed to an elastic body, the circuit being characterised by: a driving waveform means for forming a driving signal to drive the wave motor; a position sensor for detecting rotational position of the moveable body of the wave motor; a position detector means for outputting positional information from the position sensor in accordance with a request signal; and detection control means for generating the request signal and having means for altering an interval of generation of request signals in response to positional information from the position detector means.

Said position detector means may include controlling means for controlling said driving waveform means.

Preferably said controlling means has output means for outputting a control signal to terminate the out put of said driving waveform means.

The detection control means may have a counter and a coincidence circuit for altering the interval between generation of the request signals.

The invention is illustrated, merely by way of example, in the accompanying drawings:-

Figure 1 is a block diagram of a wave motor driving circuit according to the present invention;

Figure 2 is a block diagram of a detection control circuit of the wave motor driving circuit of Figure 1; and

Figures 3 and 4 are timing charts illustrating the operation of the detection control circuit of Figure 2;

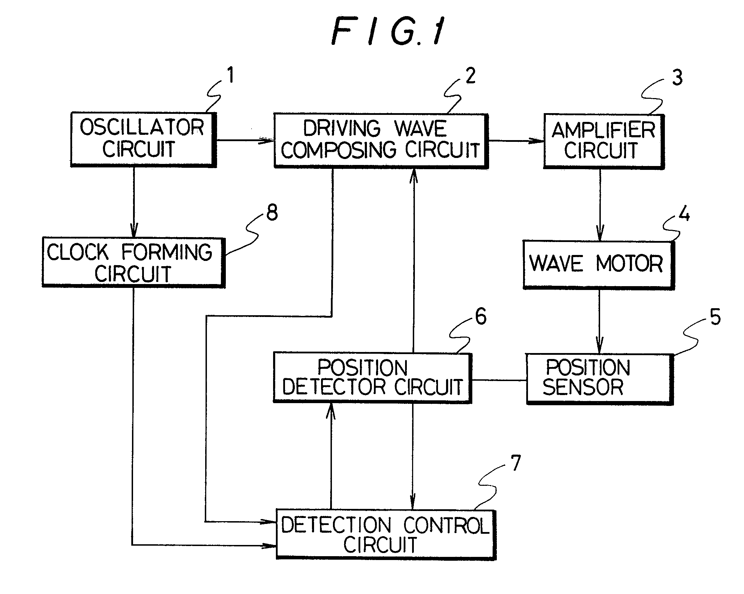

Referring first to Figure 1 there is shown a wave motor driving circuit according to the present invention. The wave motor driving circuit includes an oscillator circuit 1, a driving wave composing circuit 2 which shapes an output signal from the oscillator circuit, an amplifier circuit 3 which amplifies an output signal of the driving wave composing circuit, and a wave motor 4 driven by an output signal from the amplifier circuit 3. The wave motor (not shown in detail) has a vibrating body, a piezoelectric oscillator adhered or otherwise fixed to the vibrating body and a moveable body frictionally engaged with a surface of the vibrating body to be driven thereby. A position sensor 5 detects a stop position of the vibrating body of the wave motor 4 and a position detector circuit 6 receives an output signal from the sensor 5, as required, to control the position of the wave motor. A detection control circuit 7 controls the position detector circuit 6 in accordance with output signals of the driving wave composing circuit 2 and a clock forming circuit 8 which produces a clock signal from an output signal from the oscillator circuit 1.

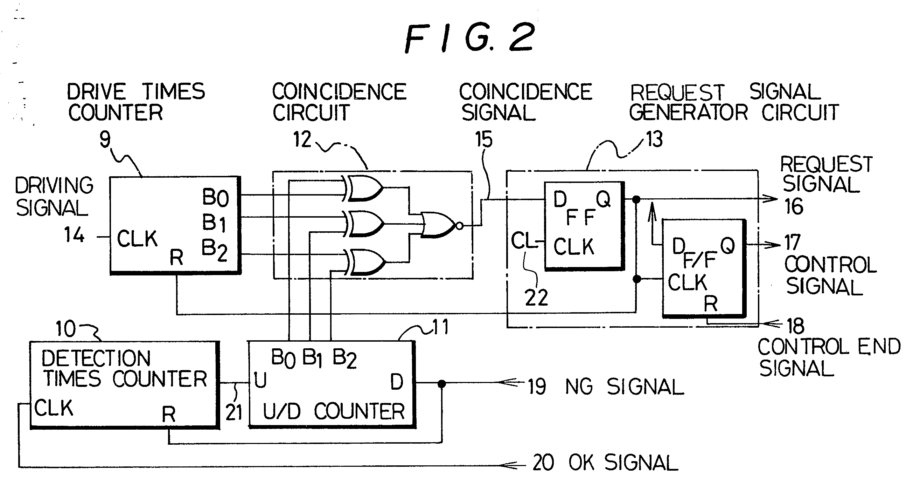

Figure 2 shows the detection control circuit 7 in greater detail. The detection control circuit has a drive times counter 9 which counts a driving signal 14 from the driving wave composing circuit 2 every time the wave motor 4 operates and delivers a count value to a coincidence circuit 12. A detection times counter 10 counts the number of times an OK signal 20 is outputted from the position detector circuit 6 when the position of the wave motor 4, after operation, is normal. An up/down counter 11 counts up according to an output of the detection times counter 10 whilst counting down according to an NG signal 19 outputted from the position detector circuit 6 when the position of the wave motor is abnormal. The up/down counter 11 delivers a count value to the coincidence circuit 12. The coincidence circuit 12 compares the value of the drive times counter 9 with the value of the up/down counter 11 and a request signal generator circuit 13 outputs a request signal 16 and a control signal 17 to the position detector circuit 6 in response to a coincidence signal 15 of the coincidence circuit 12.

The operation of the wave motor driving circuit of Figure 1 will now be described. It is assumed that the up/down counter 11 holds a value N. The drive times counter 9 counts the driving signal 14 outputted from the driving wave composing circuit 2 every time the wave motor 4 is driven, and delivers a count value to the coincidence circuit 12. The coincidence circuit 12 delivers a coincidence signal 15 to the request signal generator circuit 13 when the value of the drive times counter 9 becomes N. The request signal generator circuit 13 first delivers the request signal 16 to the position detector circuit 6. The position detector circuit 6 then detects the stop position of the wave motor 4 and delivers the OK signal 20 when the position is normal, and the NG signal 19 when the position is abnormal The detection times counter 10 outputs an up-signal 21 to the up/down counter 11 when the OK signal 20 is counted up a predetermined number of times. In response to the input of the up-signal 21, the up/down counter 11 sets the output value at (N + 1) and outputs a subsequent request signal 16 once every (N + 1) times the wave motor 4 is driven. This is because the detection of position of the wave motor once every (N + 1) times the wave motor is driven is deemed sufficiently often, as historically it has been driven normally N times.

The delivery of the control signal 17 aims to modify minute slippage of the wave motor 4. Output of the control signal 17 is in initiated by the request signal 16 and is terminated by a control end signal 18 which is a pulse signal generated by the position detector circuit 6 in accordance with rise of the position signal sent from the position sensor 5. Output of the driving wave from the driving wave composing circuit 2 continues until the fall of the control signal 17.

In the case where the NG signal 19 is outputted from the position detector circuit 6, the up/down counter 11 sets the output value at (N - 1) and outputs a subsequent request signal 16 once every (N - 1) times the wave motor 4 is driven. In addition the NG signal 19 resets the detection times counter 10 and the request signal generator circuit 13 outputs the control signal 17 to the position detector circuit 6. In response to the control signal 17, the position detector circuit 6 detects the stop position of the next drive (the drive times counter is already reset) the drive motor 4, and outputs the control end signal 18 to terminate the control signal 17. In other words, the position of the wave motor 4 is modified by the control signal 17 when the request signal 16 shows abnormality as the result of detection. By repeating the steps described above, the wave motor 4 can be driven at intervals of detection corresponding to the state of drive of the wave motor 4.

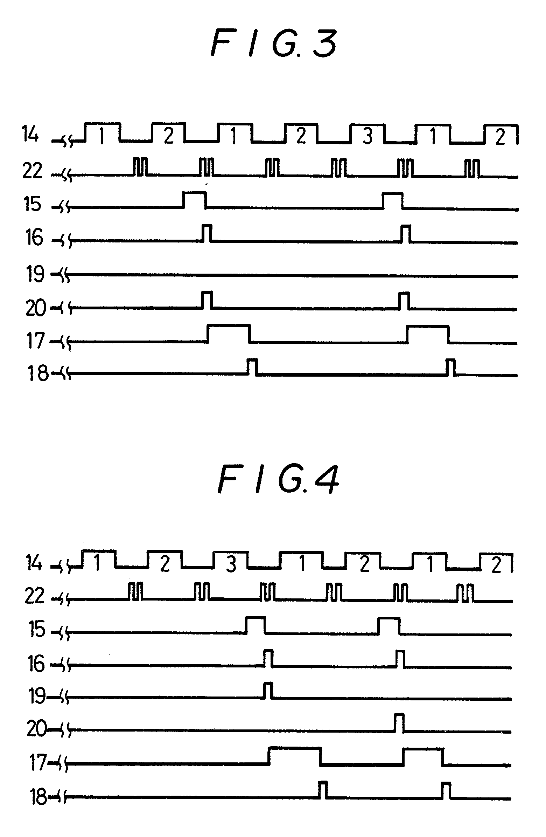

A timing chart illustrating the operation of the detection control circuit 7 is shown in Figures 3 and 4. Figure 3 shows an example of normal drive wherein detection at every two times the wave motor is driven and when it reaches a predetermined number of times the detection shifts to once every three times the wave motor is driven. Figure 4 shows an example of the case where a shift is made from detection every three times the wave motor is driven to every two times owing to abnormal drive.

In the embodiment of the present invention described above, the interval of operation of the position detector circuit 6 is altered in accordance with the state of drive of the wave motor, and therefore the wave motor driving circuit showing little positional slippage and being energy saving is achieved.

## Claims

1. A wave motor driving circuit for driving moveable body of a wave motor (4) frictionally by vibrations generated by applying a driving signal to an electromechanical transducer fixed to an elastic body, the circuit being characterised by: a driving waveform means (2) for forming a driving signal to drive the wave motor; a position sensor (5) for detecting rotational position of the moveable body of the wave motor; a position detector means (6) for outputting positional information from the position sensor (5) in accordance with a request signal (16); and detection control means (7) for generating the request signal (16) and having means (11, 12) for altering an interval of generation of request signals in response to positional information from the position detector means.

2. A wave motor driving circuit as claimed in claim 1 characterised in that said position detector means (6) includes controlling means for controlling said driving waveform means (2).

3. A wave motor driving circuit as claimed in claim 2 characterised in that said controlling means has output means for outputting a control signal to terminate the output of said driving waveform means (2).

4. A wave motor driving circuit as claimed in any preceding claim in which the detection control means has a counter (11) and a coincidence circuit (12) for altering the interval between generation of the request signals.

## FIG.1

OSCILLATOR CIRCUIT — 1

DRIVING WAVE COMPOSING CIRCUIT — 2

AMPLIFIER CIRCUIT — 3

CLOCK FORMING CIRCUIT — 8

WAVE MOTOR — 4

POSITION DETECTOR CIRCUIT — 6

POSITION SENSOR — 5

DETECTION CONTROL CIRCUIT — 7

0299771

# F I G. 2

DRIVE TIMES COUNTER

COINCIDENCE CIRCUIT

COINCIDENCE SIGNAL

REQUEST SIGNAL GENERATOR CIRCUIT

9

12

15

13

DRIVING SIGNAL

14

CLK    R

B0
B1
B2

REQUEST SIGNAL

D  F F  Q

CL    CLK

22

16

D  F/F  Q

CLK    R

17
CONTROL SIGNAL

18
CONTROL END SIGNAL

10

DETECTION TIMES COUNTER

CLK        R

21

11

B0 B1 B2

U    U/D COUNTER    D

19 NG SIGNAL

20 OK SIGNAL

0299771

029977 1

# F I G. 3

# F I G.4